**Europäisches Patentamt**

**European Patent Office**

**Office européen des brevets**

(19)

(11) Veröffentlichungsnummer: **0 041 658**
**B1**

(12)

# EUROPÄISCHE PATENTSCHRIFT

(45) Veröffentlichungstag der Patentschrift:
**10.04.85**

(51) Int. Cl.⁴: **A 01 G 9/24**, F 25 B 29/00

(21) Anmeldenummer: **81104108.6**

(22) Anmeldetag: **29.05.81**

(54) **Anordnung zum Heizen oder Kühlen von klimatisierten Räumen in Wohnungen, Gewächshäusern oder dergleichen.**

(30) Priorität: 06.06.80 DE 3021464
16.09.80 DE 3034891
17.10.80 DE 3039289

(43) Veröffentlichungstag der Anmeldung:
**16.12.81 Patentblatt 81/50**

(45) Bekanntmachung des Hinweises auf die Patenterteilung:
**10.04.85 Patentblatt 85/15**

(84) Benannte Vertragsstaaten:
**AT BE CH FR GB IT LI NL SE**

(56) Entgegenhaltungen:
CH - A - 248 161
DE - A - 2 515 363
DE - A - 2 558 791
DE - A - 2 613 203
DE - A - 2 626 644
DE - A - 2 723 503
DE - A - 2 738 254
DE - A - 2 916 530
US - A - 4 106 555
US - A - 4 234 037

BRENNSZ.-WÄRME-KRAFT, Band 29, Nr. 5, 1977 K.-D.
BALKE "Das Grundwasser als Energieträger" Seiten
191 bis 194

(73) Patentinhaber: Kückens, Alexander, Schillerstrasse 22,
D-2067 Reinfeld/Holst (DE)

(72) Erfinder: Kückens, Alexander, Schillerstrasse 22,
D-2067 Reinfeld/Holst (DE)

(74) Vertreter: Fricke, Joachim, Dr. et al, Dr. R. Döring, Dr. J.
Fricke, Patentanwälte Josephspitalstrasse 7,
D-8000 München 2 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Anordnung zum Heizen oder Kühlen von klimatisierten Räumen in Wohnungen, Gewächshäusern oder dgl. mit in den Räumen angeordneten, von Wasser als Wärmeträgerflüssigkeit durchströmbaren Rohren bzw. Rohrkörpern zum Abgeben oder Aufnehmen von Wärme, die umschaltbar mit der Wärmeabgebenden Seite einer Wärmepumpe oder ggf. umschaltbar mit einem durch die Wärmepumpe speisbaren, wärmeisolierten Warmwasserspeicher über ein Kreislaufsystem verbindbar sind, und mit einem mit dem Erdreich in direktem Wärmeaustausch stehenden Wärmetauscher, der mit der wärmeaufnehmenden Seite der Wärmepumpe über ein Wasser als Wärmeträgerflüssigkeit aufnehmendes Kreislaufsystem verbindbar ist.

Eine Anordnung dieser Art ist aus der DE-A-2 558 791 bekannt. Die bekannte Anordnung dient zum Kühlen oder Heizen von Gebäuden und weist in dem Gebäude ein Gebläse sowie eine Fussbodenheizung auf, die über ein Kreislaufsystem umschaltbar mit einem wärmeisolierten Warmwasserspeicher der wärmeaufnehmenden oder der wärmeabgebenden Seite einer Wärmepumpe und einer konventionellen Heizeinrichtung als Zusatzheizung verbindbar sind. Der Wärmepumpe ist ein Aussenluftwärmetauscher zugeordnet, der umschaltbar mit der wärmeaufnehmenden oder der wärmeabgebenden Seite der Wärmepumpe verbunden werden kann. Zum Kühlen kann die aus dem Gebäude abgeführte Wärme direkt oder über die Wärmepumpe in den Warmwasserspeicher geführt oder über den Aussenluftwärmetauscher an die Aussenatmosphäre abgegeben werden. Zum Heizen kann die Wärme aus dem Warmwasserspeicher, den Heizkörpern des Gebäudes direkt oder über die Wärmepumpe zugeführt werden. Stattdessen kann Wärme über den Aussenluftwärmetauscher gesammelt und über die Wärmepumpe, ggf. mit Zusatzwärme aus der konventionellen Heizeinrichtung, zugeleitet werden. Die bekannte Anordnung dient zum Heizen und Kühlen vor allem von Gebäuden mit grossen Sonneneinstrahlflächen, z.B. auch für Gewächshäuser. Die Steuerung der einzelnen Geräte erfolgt über von einem Regler betätigbare elektromagnetische Umschaltventile. Als Wärmeträgerflüssigkeit dient Wasser. Statt des Aussenluftwärmetauschers kann auch ein Erdwärmekollektor zur Lieferung von natürlicher Wärme eingesetzt werden.

Es ist ferner eine Anordnung mit Wärmepumpe für Heiz- und Kühlbetrieb bekannt, bei der die gleichermassen zum Heizen oder zum Kühlen verwendbaren Wärmetauscher in den Räumen mit Hilf von Dreiwegeventilen umschaltbar mit dem Verdampfer oder dem Kondensator der Wärmepumpe verbunden werden können, wobei die beim Kühlen den Räumen entzogene Wärme einem Brauchwasserspeicher zugeführt werden kann, dessen Temperatur durch Grundwassererwärmung regelbar ist (vgl. DE-A-2 613 203).

Bei einer anderen bekannten Anordnung zum Heizen oder Kühlen von klimatisierten Räumen ist ein unterirdisch angelegter Speicher vorgesehen, der einen Speicherkern in Form eines luftdurchlässigen Steinbettes aufweist und den umgebenden Erdboden als Speichermasse benutzt. Bei Verwendung des Speichers zu Kühlzwecken wird dieser während der kalten Jahreszeit möglichst tief abgekühlt, indem ein Strom kalter Aussenluft durch den Speicherkern zirkuliert wird. Während der warmen Jahreszeit wird dann ein durch den Speicher geleiteter Luftstrom abgekühlt und den Räumen zu Kühlzwecken zugeführt. Bei Verwendung des Speichers zu Heizzwecken wird der Speicher z.B. durch Durchleiten von heisser Luft oder durch einen in geschlossener Leitung geführten Strom heissen Wassers aufgeheizt, wobei die Erhitzung des Luftstromes oder des Wasserstromes durch Sonneneinstrahlung, ggf. in Verbindung mit der Ausnützung der Abwärme gewerblicher oder industrieller Betriebe erfolgt. Die gespeicherte Wärme kann in der gleichen Art wie bei der Kühlung der Räume mit Hilfe eines durch den Speicher geleiteten Luftstromes den Räumen zugeführt werden (vgl. CH-A-248 161).

Gegenüber der Anordnung nach der DE-A-2 558 791 ist es Aufgabe der Erfindung die Anordnung weiter zu vereinfachen und eine Klimatisierung von Wohnungen, Gewächshäusern oder dgl. mit wesentlich geringerem Aufwand zu ermöglichen.

Diese Aufgabe wird erfindungsgemäss dadurch gelöst, dass als mit dem umgebenden Erdreich in direktem Wärmeaustausch stehender Wärmetauscher ein Erdtank mit einem zur Ausbildung einer Wärmeschichtung ausreichendem Volumen vorgesehen ist; dass in Strömungsrichtung hinter den Rohren bzw. Rohrkörpern ein zweiter, gegenüber seiner Umgebung isolierbarer Tank mit einem zur Ausbildung einer Wärmeschichtung ausreichendem Volumen vorgesehen ist; dass der kalte Schichtbereich des zweiten Tanks mit dem warmen Schichtbereich des ersten Tanks durch eine nach Art der kommunizierenden Röhren ausgebildete Leitungsschleife verbunden ist, und dass umschaltbar

– zum Kühlen der kalte Schichtbereich des ersten Tanks direkt mit den Rohren bzw. Rohrkörpern und mit dem warmen Schichtbereich des in Strömungsrichtung dahinterliegenden zweiten Tanks und

– zum Heizen der warme Schichtbereich des zweiten Tanks entweder direkt mit den Rohren bzw. Rohrkörpern oder mit der wärmeaufnehmenden Seite der Wärmepumpe und mit dem kalten Schichtbereich des ersten Tankes zu einem geschlossenen Kreislauf verbindbar ist.

Durch das zur Wärmeschichtbildung ausreichende Volumen der beiden Tanks wird es möglich, die beiden Tanks in den verschiedenen umschaltbar zur Wirkung zu bringenden Kreisläufen in Reihe zu schalten, obwohl die Wärmeträgerflüssigkeit in den beiden Tanks im Regelfall während des Betriebes unterschiedliche Temperaturen aufweist. Durch diese in Reihe-Schaltung der beiden Tanks im gleichen Kreislauf ergibt sich eine ausserordentliche Vereinfachung der Anordnung und dennoch die Möglichkeit, durch einfache Umschaltung unterschiedliche Kreisläufe zur Wirkung zu bringen. Das zur Wärmeschichtung ausreichende Volumen der Tanks gewährleistet auch, dass zu Kühl- und Klimatisierungszwecken stets eine ausreichende Menge von Wärmeträgerflüssigkeit mit der durch die Einbaulage des ersten Tankes im Erdreich bestimmten Erdtemperatur zur Verfügung steht. Damit kann eine ständige Kühlung unter Umgehung der Wärmepumpe erfolgen, wodurch auch die Voraussetzung dafür erfüllt ist, dass man den kalten Schichtbereich des ersten Tanks direkt mit einem zum Kühlen dienenden Wärmetauscher eines begehbaren Kühlraumes und dem warmen Schichtbereich des in Strömungsrichtung dahinterliegenden zweiten Tanks zu einem geschlossenen Kreislauf ständig verbunden hält, der auch dann aufrechterhalten werden kann, wenn in den anderen Räumen der Wohnung andere durch die Anordnung ermöglichte Kreisläufe wirksam sind.

Die Reihenschaltung der beiden Tanks ermöglicht es fernerhin in dem ganzen Kreislaufsystem der Anordnung die gleiche Wärmeträgerflüssigkeit, nämlich Wasser, zu verwenden.

In vielen Fällen, bei Wohnungen z.B. in der Übergangszeit oder bei Gewächshäusern während der Nacht, reicht es zu Heizzwecken aus, wenn der Kühlkreislauf in der Weise umgekehrt wird, dass der warme Schichtbereich des zweiten Tanks direkt mit den Rohren bzw. Rohrkörpern und mit dem kalten Schichtbereich des ersten Tankes zu einem geschlossenen Kreislauf verbunden wird, so dass die im zweiten Tank gespeicherte Wärme direkt den Rohren oder Rohrkörpern zugeleitet wird. Zu Heizzwecken können aber auch, wie sonst üblich, die Rohre oder Rohrkörper direkt mit einem bei Wohnungen zumeist vorhandenen Warmwasserspeicher verbunden sein, der zum Aufheizen mit der wärmeabgebenden Seite der Wärmepumpe verbindbar ist. Zu Heizzwecken kann aber auch die wärmeaufnehmende Seite der Wärmepumpe mit den beiden strömungsmässig in Reihe geschalteten Tanks zu einem geschlossenen Kreislauf verbunden sein, wobei die Wärmepumpe die Rohre oder Rohrkörper direkt oder über den wärmeisolierten Warmwassertank speist. Ist der Wärmevorrat des zweiten Tanks erschöpft kann in diesem Fall auch der Erdtank als Erdwärmekollektor für die Wärmepumpe dienen.

Der zweite Tank kann als Oberflächentank angeordnet und mit einer entsprechenden Wärmeisolierung verbunden sein. Bevorzugt ist der zweite Tank jedoch gegenüber dem ersten Tank der Tiefe und der Seite nach mit Abstand versetzt ebenfalls in das Erdreich eingebaut und steht mit diesem in direktem Wärmetausch. Hierbei wird die im trockenen Zustand des Erdreiches normalerweise geringe Wärmeleitfähigkeit des Erdreiches zur Wärmeisolierung des zweiten Tankes ausgenutzt. Gleichzeitig damit kann die Wärmespeicherkapazität des den zweiten Erdtank umgebenden Erdreiches zur vorübergehenden Speicherung von Wärme ausgenutzt werden.

Der Einbau des zweiten Tankes in das Erdreich hat den Vorteil, dass bei Bedarf die Wärmeisolierungswirkung des den Tank umgebenden Erdreiches gezielt herabgesetzt oder weitgehend aufgehoben werden kann. Zu diesem Zweck sind eine Regenwassersammeleinrichtung, eine Versickerungseinrichtung und eine Steuereinrichtung vorgesehen, wobei mittels der Steuereinrichtung zur gezielten Aufhebung der Wärmeisolierwirkung des den zweiten Tank umgebenden Erdreiches Regenwasser in dieses Erdreich eingebracht werden kann. Dadurch kann einmal die in diesem Erdreich zuvor gespeicherte Wärme über den zweiten Tank bei Bedarf schneller abgezogen werden und es kann zusätzliche Erdwärme aus ferner abliegenden Bereichen des Erdreiches dem zweiten Erdtank zugeleitet werden.

Ein Wärmeübergang von dem zweiten Tank zu dem ersten Tank wird durch die zwischen diesen beiden nach Art der kommunizierenden Röhren ausgebildeten Leitungsschleife weitgehend verhindert, ohne dass das Überlaufen der Wärmeträgerflüssigkeit von dem zweiten Tank in den ersten Tank behindert wird.

Der zweite Tank kann zweckmässigerweise einen Wärmetauscher aufweisen, der an den Ablauf der Haushalt-Abwässer angeschlossen ist, um so auch die Abwärme der Wohnungen wieder nutzbar zu machen, wie dies an sich bekannt ist.

Die beiden Tanks können auch zu einem einzigen Tank zusammengefasst werden, der mit seiner Längsachse in senkrechter Orientierung in das Erdreich eingebaut ist, wobei dessen unterer Bereich als der erste Tank und dessen oberer wärmeisolierter Bereich als der zweite Tank mit dem Kreislaufsystem verbindbar ist.

Die Erfindung wird nachfolgend anhand schematischer Zeichnungen an zwei Ausführungsbeispielen näher erläutert.

Es zeigen:

Figur 1 schematisch eine Anordnung nach der Erfindung zum Heizen oder Kühlen eines Gewächshauses.

Figur 2 in schematischer Darstellung eine Anordnung zum Heizen oder Kühlen der klimatisierten Räume einer Wohnung und

Figur 3 im Ausschnitt die Weiterbildung des zweiten Tankes der Anordnung nach Figur 2.

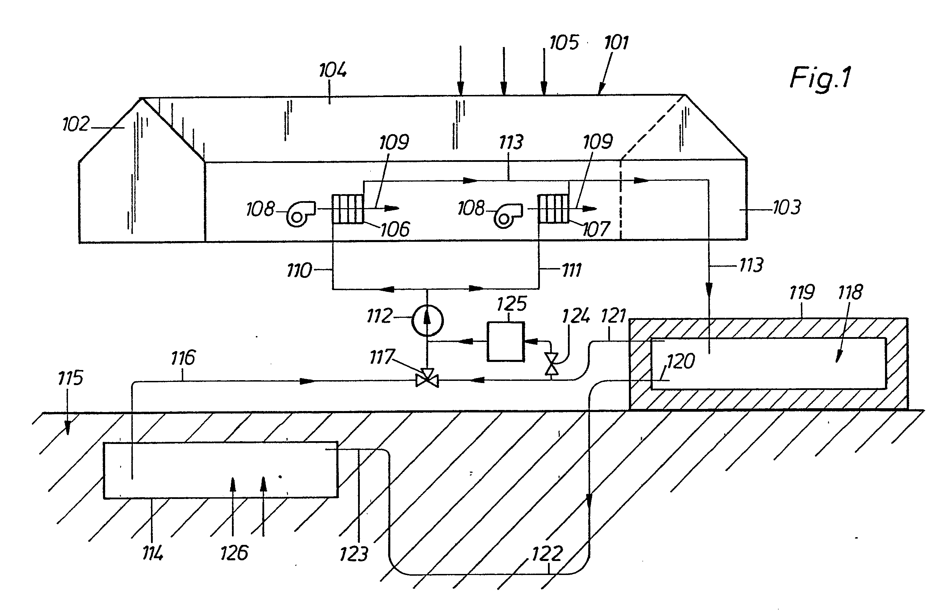

Figur 1 zeigt schematisch ein Gewächshaus 101 mit einer der durch die Pfeile 105 angedeuteten Sonneneinstrahlung ausgesetzten Dachfläche 104 und Stirnflächen 102 und 103. Die grosse Dachfläche 104 erlaubt einen intensiven Durchgang der Sonneneinstrahlung und damit eine rasche Aufheizung des Gewächshausinneren, sowie eine rasche Wärmeabstrahlung bei kühler Aussentemperatur. Innerhalb des Gewächshauses sind übliche Radiatoren in Form von Rohren oder Rohrkörpern 106, 107 angeordnet, denen zur Erhöhung des Wärmeüberganges Gebläse 108 zugeordnet sind, welche für eine durch die Pfeile 109 wiedergegebene Zwangskonvektion Sorge tragen. In der Praxis erfolgt die Durchblasung nicht in horizontaler, sondern in senkrechter Richtung.

Die Rohre bzw. Rohrkörper 106, 107 sind über Leitungen an ein Kreislaufsystem angeschlossen, das bei Gewächshäusern üblicherweise eine konventionelle Heizeinrichtung umfasst.

Das in Figur 1 dargestellte Kreislaufsystem weist eine Leitung 113 auf, welche die Rohre oder Rohrkörper 106, 107 mit einem oberirdisch angeordneten, eine Wärmeisolierung 119 aufweisenden Tank 118 verbindet. Die andere Seite der Rohrkörper 106 und 107 sind über Leitungen 110, 111 an die Druckseite einer Umwälzpumpe 112 angeschlossen, die umschaltbar von der wärmeabgebenden Seite einer Wärmepumpe 125 oder über ein Umschaltventil 117 wahlweise über die Leitung 121 aus dem warmen Schichtbereich des Tankes 118 oder über die Leitung 116 aus dem kalten Schichtbereich eines in den Erdboden 115 eingebauten Tanks 114 gespeist werden kann. Die beiden Tanks 114 und 118 weisen jeweils ein zur Wärmeschichtbildung ausreichendes Volumen auf. Der Tank 114 steht in direktem Wärmeaustausch mit dem umgebenden Erdreich, wie dies durch die Pfeile 126 angedeutet ist.

Der kalte Schichtbereich des Tankes 118 steht mit dem warmen Schichtbereich des Tankes 114 über eine nach Art der kommunizierenden Röhren ausgebildete Leitungsschleife 122, 123 in Strömungsverbindung. Diese Leitungsschleife lässt einen Übertritt der Wärmeträgerflüssigkeit von dem Tank 118 zu dem Tank 114 unbehindert zu, verhindert dabei gleichzeitig jedoch weitgehend einen Wärmetransport von dem einen Tank zum anderen.

Die wärmeaufnehmende Seite der Wärmepumpe 125 kann durch ein Ventil 124 umschaltbar in das Kreislaufsystem eingeschaltet werden.

Zum Kühlen des Inneren des Gewächshauses 101 wird über die Pumpe 112 das als Wärmeträgerflüssigkeit dienende Wasser aus dem kalten Schichtbereich des Tankes 114 durch die Rohrkörper 106, 107 geleitet. Die dabei aufgenommene Wärme wird durch das Wasser in den warmen Schichtbereich des Tankes 118 transportiert. Gleichzeitig kann Wasser aus dem kalten Schichtbereich bei 120 aus dem Tank 118 und über die Leitungsschleife 122, 123 in den warmen Schichtbereich des Tankes 114 übertreten. Auf diese Weise kann das Innere des Gewächshauses auf die gewünschte Lufttemperatur herabgekühlt werden. Die dabei abgeführte Wärme wird in dem Tank 118 gespeichert.

Um in der Nacht die notwendige Temperatur im Gewächshaus trotz Wärmeabstrahlung über die Dachfläche 104 erhalten zu können wird das Kreislaufsystem gegenüber der Kühlstellung während des Tages umgeschaltet, so dass nunmehr über die Umwälzpumpe 112 Wasser aus der warmen Schicht des Tankes 118 durch die Rohrkörper 106, 107 gesaugt und dem Tank 114 zugeführt werden kann. Ist ausnahmesweise im Gewächshaus der Wärmebedarf grösser so kann in diesen Kreislauf die Wärmepumpe 125 eingeschaltet werden. Die Leitungsverbindungen zu der Wärmepumpe 125 sind in Fig. 1 vereinfacht dargestellt, da solche dem Fachmann geläufig sind. Die Wärmepumpe 125 braucht bei einer Anordnung für den Betrieb eines Gewächshauses nach Fig. 1 nur ausnahmsweise in Betrieb genommen zu werden.

Auch bei anderen Anordnungen, bei denen Räume einer erhöhten Wärmeeinstrahlung ausgesetzt sind, z.B. bei Räumen mit Abdeckungen aus eloxierten Aluminiumziegeln oder dgl., die zu einer übermässigen Erwärmung des Raumes führen, kann die Anordnung nach Fig. 1 eingesetzt werden. In besonderen Fällen kann auch eine Leitungsverbindung zwischen der wärmeaufnehmenden Seite der Wärmepumpe 125 und dem Tank 114 vorgesehen sein, um diesen Bedarfsweise als Erdwärmekollektor verwenden zu können. Als Notaggregat kann auch eine übliche zusätzliche Heizeinrichtung dem Kreislaufsystem zuschaltbar sein.

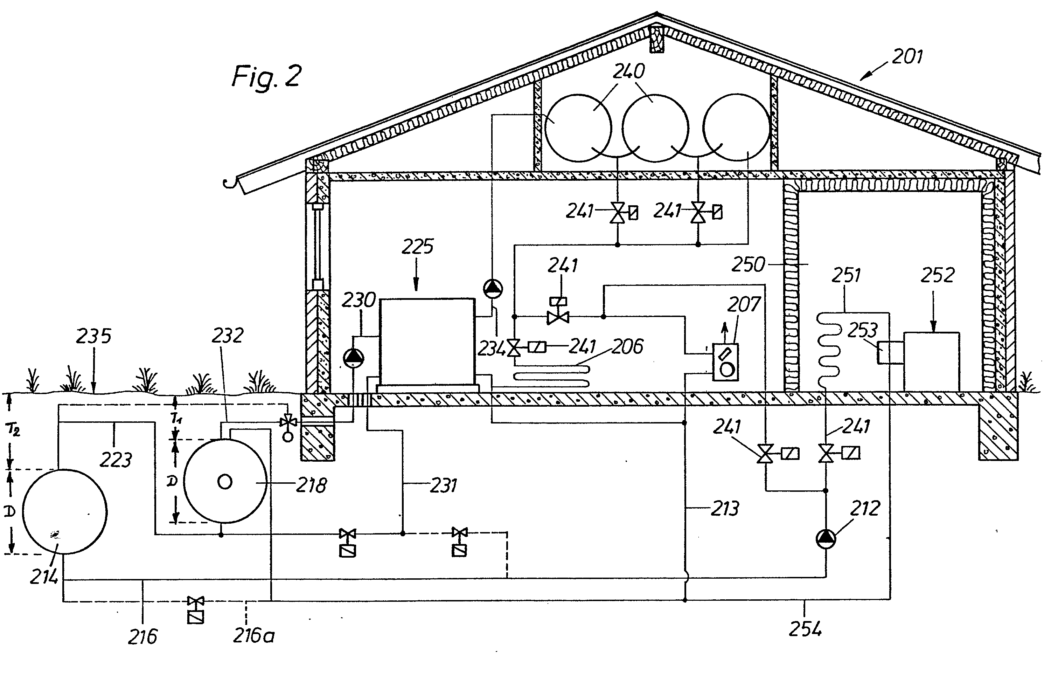

Die Figur 2 zeigt eine Anordnung zum Heizen oder Kühlen von klimatisierten Räumen in Wohnungen. Die Figur zeigt schematisch einen Querschnitt durch ein Haus 201, das mit üblichen Wohn- und Wirtschaftsräumen und einer begehbaren Kühlkammer 250 versehen ist. In dem begehbaren Kühlraum sind eine Kühlschlange 251 und ein Kühl- oder Gefrierschrank oder dgl. 252 vorgesehen, dessen wärmeabgebender Teil 253 mit einer mit der Kühlschlange 251 verbundenen Leitung 254 im Wärmetausch steht. Die Kühlschlange 251 ist zulaufseitig über ein Umschaltventil mit der Austrittsseite einer Umwälzpumpe 212 verbunden, die über eine Leitung 216 mit dem kalten Schichtbereich eines im Erdboden eingebauten und mit diesem in direktem Wärmeaustausch stehenden Tankes 214 verbunden ist. Der Tank 214 weist einen für eine Wärmeschichtbildung ausreichenden Durchmesser D auf und ist in einer Einbautiefe $T_2$ unter der Erdoberfläche 235 eingebaut, um das in dem Tank 214 befindliche Wasser auf eine durch die Einbautiefe vorbestimmte Erdtemperatur von 4° bis 6° zu halten. Zum Kühlen des begehbaren Kühlraumes 250 wird Wasser aus dem kalten Schichtbereich des Tankes 214 über die Pumpe 212 durch die Kühlschlange 251 gepumpt. Nach Aufnahme der Wärme gelangt das Wasser über die Leitung 254 in den warmen Schichtbereich eines zweiten ebenfalls in das Erdreich eingebauten Tankes 218, der ebenfalls mit dem umgebenden Erdreich in direktem Wärmekontakt steht. Der Durchmesser D dieses Erdtankes 218 ist ebenfalls so bemessen, dass sich eine Wärmeschichtung in dem Tank ausbildet. Wie die Einbautiefe $T_1$ des Tankes 218 zeigt, sind die beiden Tanks 214, 218 sowohl der Seite nach als auch der Einbautiefe nach gegeneinander so weit versetzt, dass die mit den beiden Tanks jeweils in Wärmeaustausch stehenden Erdbereiche sich nicht gegenseitig überlappen und damit keine gegenseitige Beeinflussung der beiden Tanks stattfindet.

Wie in dem vorstehend beschriebenen Beispiel ist der kalte Schichtbereich des Tankes 218 mit dem warmen Schichtbereich des Tankes 214 über eine nach Art der kommunizierenden Röhren ausgebildete Leitungsschleife 223 verbunden, die einen Übertritt des als Wärmeträgerflüssigkeit dienenden Wassers gestattet, dabei einen Wärmeübergang jedoch weitgehend verhindert.

Die beiden strömungsmässig in Reihe liegenden Tanks 214 und 218 können umschaltbar in einem geschlossenen Kreislauf, der eine Umwälzpumpe enthält, über Leitungen 230, 232 und 231 mit der wärmeaufnehmenden Seite einer Wärmepumpe 225 verbunden werden. Damit kann die in dem Tank 218 gespeicherte Wärme von der Wärmepumpe aufgenommen werden. Die Anordnung kann so getroffen werden, dass der Rücklauf von der Wärmepumpe in Abhängigkeit von der Temperatur des Rücklaufes wahlweise dem kalten Schichtbereich des Tankes 218 oder dem kalten Schichtbereich des Tankes 214 zugeführt wird. Es kann auch eine umschaltbare Verbindung 216a vorgesehen sein, die automatisch den Rücklauf des Kühlwassers aus dem begehbaren Kühlraum 250 dem kalten Schichtbereich des Tankes 214 zuführt, wenn das Kühlwasser im Kühlraum 250 keine Wärme aufnimmt und somit auch keine Wärme in den Tank 218 transportiert werden kann.

Die wärmeabgebende Seite der Wärmepumpe 225 kann über Leitung 234 und Umwälzpumpe zum Speisen eines oder mehrerer Warmwassertanks 240 dienen. Aus diesen Warmwassertanks 214 kann über Umschaltventile Warmwasser zu Heizzwecken direkt den Rohren 206 einer Fussbodenheizung oder den Rohrkörpern von Radiatoren zugeführt werden. Ablaufseitig sind diese Rohre oder Rohrkörper 206, 207 zur Schliessung des Kreislaufes mit der wärmeabgebenden Seite der Wärmepumpe 225 oder über Leitung 213 mit dem warmen Schichtbereich des Tankes 218 verbunden. Damit können die warmen Schichtbereiche des Tankes 218 zu Heizzwecken auch direkt mit den Rohren oder Rohrkörpern 206, 207 verbunden werden, die den Kreislauf über die in der Wirkungsrichtung umkehrbare Pumpe 212 und die Leitung 216 zu dem kalten Schichtbereich des mit dem Tank 218 in Reihe liegenden Tanks 214 schliessen.

Bei Umkehrung der Pumprichtung der Pumpe 12 und bei entsprechender Schaltung der verschiedenen Umschaltventile 241 können die beiden Tanks 214, 218 zu Kühlzwecken mit den Rohren und Rohrkörpern 206, 207 ebenfalls zu einem geschlossenen Kreislauf verbunden werden, in welchem Wasser aus dem kalten Schichtbereich 214 durch die Rohre oder Rohrkörper geleitet und in den warmen Schichtbereich des Tankes 218 zurückgeführt wird.

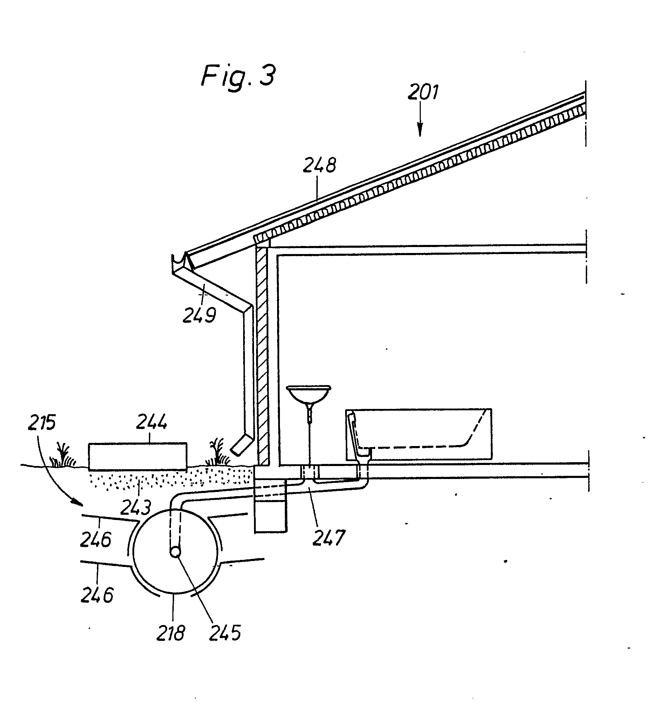

Wie Fig. 3 andeutet können die im Erdreich eingebauten und mit diesem in direktem Wärmekontalt stehenden Tanks, insb. der Tank 218, mit die Wärmetauschfläche vergrössernden Flügeln 246 versehen sein. Auch kann dem Tank 218 ein Wärmetauscher 245 zugeordnet sein, der an den Ablauf 247 der warmen Abwässer des Haushaltes angeschlossen ist, um die Abwärme über den Tank 218 zurückzugewinnen.

Da das den Tank 218 umgebende Erdreich 215 im trockenen Zustand eine ausreichend geringe Wärmeleitfähigkeit aufweist dient das Erdreich für den Tank 218 gleichermassen als Wärmeisolierung wie auch als Vergrösserung der Speicherkapazität für Wärme. Um diese Wärme wieder zurückzugewinnen und zu Heizzwecken in das Kreislaufsystem zurückführen zu können kann es zweckmässig sein die Wärmeleitfähigkeit und damit Wärmeisolierfähigkeit des umgebenden Erdreiches 215 zeitweilig zu verändern. Zu diesem Zweck ist ein Regenwassersammelsystem vorgesehen, von dem nur die Sammelelemente 248, 249 dargestellt sind und zu dem ein Regenwasserspeicher gehört, sowie eine Steuereinrichtung 244, die eine nicht dargestellte Versickerungseinrichtung für das Regenwasser steuert. Dadurch kann, wie bei 243 angedeutet ist, Regenwasser aus der Sammeleinrichtung in das den Tank 218 umgebende Erdreich 215 versickert werden, wodurch die Isolierwirkung dieses Erdreiches vorübergehend aufgehoben wird.

Die beiden Tanks 214, 218 können auch zu einem gemeinsamen Tank vereinigt sein, der zweckmässigerweise mit seiner Längsachse senkrecht im Boden versenkt eingebaut ist. Dabei bildet sich in dem senkrechten Tank eine starke Wärmeschichtung aus, die es ermöglicht, den unteren Tankabschnitt als ersten Tank zu Kühlzwekken und den oberen Abschnitt, der bevorzugt wärmeisoliert ist, zu Heizzwecken als zweiten Tank an das Kreislaufsystem anzuschliessen.

Die neue Anordnung lässt sich auf einfache Weise auch bei beengten Verhältnissen einbauen und vereinfacht den Betrieb durch Verwendung einfachen Wassers als Wärmeträgerflüssigkeit. In aller Regel sind Frostschutzmittel oder Rostschutzmittel nicht erforderlich, so dass auch keinerlei Gefahr für eine Grundwasserverschmutzung besteht. Ein Einfrieren durch latente Kälte beim Abschalten der Wärmepumpe kann leicht durch Vorsehen einer entsprechenden Nachlaufzeit der Umwälzpumpe verhindert werden.

**Patentansprüche**

1. Anordnung zum Heizen oder Kühlen von klimatisierten Räumen in Wohnungen (201), Gewächshäusern (101) oder dgl. mit in den Räumen angeordneten, von Wasser als Wärmeträgerflüssigkeit durchströmten Rohren bzw. Rohrkörpern (106, 107; 206, 207) zum Abgeben oder Aufnehmen von Wärme, die umschaltbar mit der wärmeabgebenden Seite einer Wärmepumpe (125; 225) oder ggf. umschaltbar mit einem durch die Wärmepumpe speisbaren, wärmeisolierten Warmwasserspeicher (240) über ein Kreislaufsystem verbindbar sind, und mit einem mit dem umgebenden Erdreich in direktem Wärmeaustausch stehenden Wärmetauscher (114; 214), der mit der wärmeaufnehmenden Seite der Wärmepumpe über ein Wasser als Wärmeträgerflüssigkeit aufnehmendes Kreislaufsystem verbindbar ist, dadurch gekennzeichnet, dass als mit dem umgebenden Erdreich in direktem Wärmeaustausch stehender Wärmetauscher ein Erdtank (114; 214) mit einem zur Ausbildung einer Wärmeschichtung ausreichendem Volumen vorgesehen ist, dass in Strömungsrichtung hinter den Rohren bzw. Rohrkörpern (106, 107; 206, 207) ein zweiter, gegenüber seiner Umgebung isolierbarer Tank (118; 218) mit einem zur Ausbildung einer Wärmeschichtung ausreichendem Volumen vorgesehen ist; dass der kalte Schichtbereich des zweiten Tanks (118; 218) mit dem warmen Schichtbereich des ersten Tankes (114; 214) durch eine nach Art der kommunizierenden Röhren ausgebildete Leitungsschleife (122, 123; 223) verbunden ist und dass umschaltbar

— zum Kühlen der kalte Schichtbereich des ersten Tankes (114; 214) direkt mit den Rohren bzw. Rohrkörpern (106, 107; 206, 207) und mit dem warmen Schichtbereich des in Strömungsrichtung dahinterliegenden zweiten Tanks (118; 218) und

— zum Heizen der warme Schichtbereich des zweiten Tanks (118; 218) entweder direkt mit den Rohren bzw. Rohrkörpern (106, 107; 206, 207) oder mit der wärmeaufnehmenden Seite der Wärmepumpe (125, 225) und mit dem kalten Schichtbereich des ersten Tanks (114; 214) zu einem geschlossenen Kreislauf verbunden ist.

2. Anordnung nach Anspruch 1, dadurch gekennzeichnet, dass der zweite Tank (218) gegenüber dem ersten Tank (214) der Tiefe und der Seite nach mit Abstand versetzt ebenfalls in das Erdreich eingebaut ist und mit diesem in direktem Wärmetausch steht.

3. Anordnung nach Anspruch 1, dadurch gekennzeichnet, dass eine Regenwassersammeleinrichtung (248, 249), eine Versickerungseinrichtung und eine Steuereinrichtung (244) vorgesehen sind, mittels der zur gezielten Aufhebung der Wärmeisolierung des den zweiten Tank (218) umgebenden Erdreiches (215) Regenwasser in dieses Erdreich einbringbar ist.

4. Anordnung nach Anspruch 2, dadurch gekennzeichnet, dass der zweite Tank (218) einen wärmetauscher (245) aufweist, der an den Ablauf (244) der Haushaltabwässer angeschlossen ist.

5. Anordnung nach Anspruch 1, dadurch gekennzeichnet, dass ein einziger langgestreckter Tank mit seiner Längsachse in senkrechte Orientierung in das Erdreich eingebaut ist, dessen unterer Bereich als der erste Tank und dessen oberer, wärmeisolierter Bereich als der zweite Tank mit dem Kreislaufsystem verbindbar sind.

6. Anordnung nach Anspruch 1, dadurch gekennzeichnet, dass der kalte Schichtbereich des ersten Tankes (214) direkt mit einem zum Kühlen dienenden Wärmetauscher (251) eines begehbaren Kühlraumes (250) und dem warmen Schichtbereich des in Strömungsrichtung dahinterliegenden zweiten Tanks (218) zu einem geschlossenen Kreislauf ständig verbunden ist.

## Claims

1. An arrangement for the heating or cooling of conditioned rooms in appartments (201), greenhouses (101) or the like with pipes or pipe members (106, 107; 206, 207) which are arranged in the rooms and through which water, as the heat transfer fluid, flows in order to radiate or absorb heat and which may be connected in a reversible manner to the heat radiating side of a heat pump (125; 225) or, where appropriate, may be connected in a reversible manner by way of a circulatory system to a heat insulated warm water store (240) which may be supplied by the heat pump, and to a heat exchanger (114; 214) which is in direct heat exchange with the surrounding ground and may be connected to the heat absorbing side of the heat pump by way of a circulatory system containing water as the heat transfer fluid, characterized in that a ground tank (114; 214) having a sufficient volume to form heat layers is provided as the heat exchanger in direct heat exchange with the surrounding ground; in that a second tank (118; 218), which may be insulated from its surroundings and having a sufficient volume to form heat layers, is provided in the direction of flow downstream of the pipes or pipe members (106, 107; 206, 207); in that the cold layer region of the second tank (118; 218) is connected to the warm layer region of the first tank (114; 214) by a loop circuit (122, 123; 223) formed according to the type of connecting pipes and in that

— for cooling, the cold layer region of the first tank (114; 214) is connected in a reversible manner directly to the pipes or pipe members (106, 107; 206, 207) and to the warm layer region of the second tank (118; 218) disposed downstream in the direction of flow and

— for heating, the warm layer region of the second tank (118; 218) is connected in a reversible manner either directly to the pipes or pipe members (106, 107; 206, 207) or to the heat absorbing side of the heat pump (125, 225) and to the cold layer region of the first tank (114; 214) so as to form a closed circuit.

2. An arrangement according to claim 1, characterized in that the second tank (218) is also installed in the ground so as to be offset at a distance in terms of depth and towards the side with respect to the first tank (214) and is in direct heat exchange with the ground.

3. An arrangement according to claim 1, characterized in that a rain water collector device (248, 249), a seepage device, and a control device (244) are provided, by means of which, in order to stop the heat insulation of the ground (215) surrounding the second tank (218) when desired, rain water may be introduced into this ground.

4. An arrangement according to claim 2, characterized in that the second tank (218) has a heat exchanger (245) which is connected to the outlet (247) of domestic waste water.

5. An arrangement according to claim 1, characterized in that a single elongate tank with its longitudinal axis directed vertically is installed in the ground and whose lower region as the first tank and whose upper heat-insulated region as the second tank may be connected to the circulatory system.

6. An arrangement according to claim 1, characterized in that the cold layer region of the first tank (214) is permanently connected directly to a heat exchanger (251) of a cooling space (250) which allows passage around it, which heat exchanger is used for cooling, and to the warm layer region of the second tank (218) disposed downstream in the direction of flow, so as to form a closed circuit.

## Revendications

1. Dispositif pour chauffer et rafraîchir des pièces climatisées dans des résidences (201), des serres (101) ou similaires, comportant des tubes ou corps tubulaires (106, 107; 206, 207) disposés dans les locaux et parcourus par de l'eau comme liquide caloporteur, pour céder ou absorber de la chaleur, qui peuvent être reliés de façon commutable, par l'intermédiaire d'un système de circulation, au côté de fourniture de chaleur d'une pompe de chaleur (125; 225) ou éventuellement de façon commutable à un accumulateur de chaleur calorifugé (240) pouvant être alimenté par la pompe de chaleur, et un échangeur de chaleur (114; 214), qui est en échange direct de chaleur avec le sol qui l'entoure, et qui peut être relié au côté d'absorption de chaleur de la pompe de chaleur par l'intermédiaire d'un système de circulation contenant de l'eau comme liquide caloporteur, caractérisé en ce que comme échangeur de chaleur en échange direct de chaleur avec le sol est prévu un réservoir enterré (114; 214) d'un volume suffisant pour constituer une stratification de chaleur, en ce qu'à la suite des tubes ou corps tubulaires (106, 107; 206, 207), dans le sens d'écoulement, est prévu un deuxième réservoir (118; 218) pouvant être isolé de son environnement et ayant un volume suffisant pour constituer une stratification de chaleur, en ce que la région de couche froide du deuxième réservoir (118; 218) est reliée à la région de couche chaude du premier réservoir (114; 214) par une boucle de tuyau (122, 123; 223) constituée à la façon des tubes communicants, et en ce que, de façon commutable:
– pour le refroidissement, la région de couche froide du premier réservoir (114; 214) est reliée, en un circuit fermé, directement aux tubes ou corps tubulaires (106, 107; 206, 207) et à la région de couche chaude du deuxième réservoir (118; 218) placé à la suite dans le sens d'écoulement, et
– pour le chauffage, la région de couche chaude du deuxième réservoir (118; 218) est reliée, en circuit fermé, soit directement aux tubes ou corps tubulaires (106, 107; 206, 207) soit au côté d'absorption de chaleur de la pompe de chaleur (125, 225) et à la région de couche froide du premier réservoir (114; 214).

2. Dispositif selon la revendication 1, caractérisé en ce que le deuxième réservoir (218), décalé en profondeur et latéralement relativement au premier réservoir (214), est également installé dans le sol et est en échange direct de chaleur avec celui-ci.

3. Dispositif selon la revendication 1, caractérisé en ce qu'il est prévu un dispositif collecteur d'eau de pluie (248, 249), un dispositif d'infiltration et un dispositif de commande (244) au moyen duquel, pour supprimer de façon dirigée l'isolation thermique du sol (215) entourant le deuxième réservoir (218), on peut introduire de l'eau de pluie dans ce sol.

4. Dispositif selon la revendication 2, caractérisé en ce que le deuxième réservoir (218) présente un échangeur de chaleur (245), qui est raccordé à l'évacuation (244) des eaux usées ménagères.

5. Dispositif selon la revendication 1, caractérisé en ce qu'un seul réservoir allongé est installé dans le sol, son axe longitudinal étant orienté verticalement, sa région inférieure en tant que premier réservoir et sa région supérieure calorifugée en tant que deuxième réservoir pouvant être reliées au système de circulation.

6. Dispositif selon la revendication 1, caractérisé en ce que la région de couche froide du premier réservoir (214) est constamment reliée directement, en circuit fermé, à un échangeur de chaleur (251) servant au refroidissement, dans une enceinte de refroidissement accessible pour une inspection, et à la région de couche chaude du deuxième réservoir (218) placé à la suite dans le sens d'écoulement.

Fig.1

0 041 658

Fig. 2

Fig. 3